# EUROPEAN PATENT APPLICATION

(11) **EP 2 717 629 A1**
(43) Date of publication of application: **09.04.2014**
(21) Application number: 11866451.5
(22) Date of filing: 31.05.2011
(51) Int. Cl.: H04W 48/18, H04W 48/16, H04W 88/06

(54) **WIRELESS COMMUNICATION SYSTEM, MOBILE STATION, BASE STATION, AND WIRELESS COMMUNICATION METHOD**

(71) Applicant: Fujitsu Limited, Kawasaki-shi, Kanagawa 211-8588 (JP)
(72) Inventor: YASUOKA, Hirotomo, Kawasaki-shi Kanagawa 211-8588 (JP); CHIBA, Katsuhiko, Kawasaki-shi Kanagawa 211-8588 (JP); TOYODA, Minoru, Kawasaki-shi Kanagawa 211-8588 (JP)
(74) Representative: Stebbing, Timothy Charles
(86) International application number: PCT/JP2011/062543
(87) International publication number: WO 2012/164694

(57) **Abstract**

A radio communications system(1) includes a mobile station(10), a third generation(3G) base station(30) that communicates with the mobile station(10) using a 3G system, and a long time evolution(LTE) base station(20) that communicates with the mobile station(10) using an LTE system. The mobile station(10) includes a communication controller(12) and a 3G communication module(15). The communication controller(12) determines feasibility of communication with the LTE base station(20) using the LTE system. The 3G communication module(15) notifies the 3G base station(30) that the communication with the LTE base station(20) is not feasible at the time of transmitting a communication request to the 3G base station(30) when the communication controller(12) determines that the communication is not feasible. The 3G base station(30) communicates with the mobile station(10) using the 3G system in response to the communication request without requesting the mobile station(10) to communicate with the LTE base station(20).

## Description

### [Technical Field]

The present invention relates to a radio communications system, a mobile station, a base station, and a radio communications method.

### [Background Art]

Along with the advancement of radio communication technologies, switching from a conventional radio communication network to a radio communication network of a higher communication speed has been propelled. For example, shifting from a third generation (3G) network to a long time evolution (LTE) network has been rapidly propelled in recent years. However, a state of all of mobile stations and base stations to use the LTE network to perform radio communication has not yet been reached. As a result, networks of different communications systems may coexist in one area.

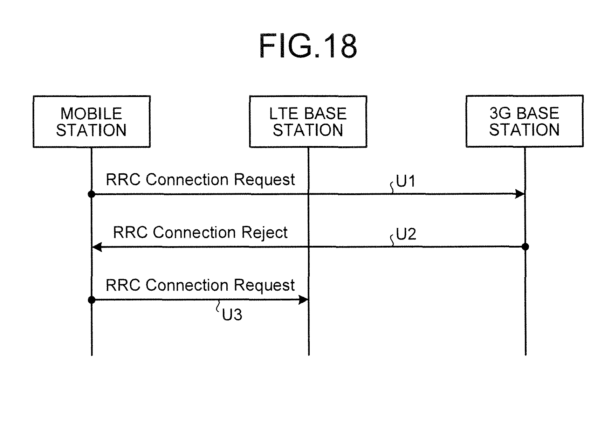

Under the above-described environment of coexisting the networks of different communications systems, it is desirable that a mobile station capable of communicating via an LTE network perform communication via not a 3G network but the LTE network in terms of communication speed and effective use of radio resource. To achieve such communication via the LTE network, a technology is disclosed to switch a plurality of radio communications systems. FIG. 18 is a diagram for explaining a conventional technology of switching the radio communications systems. In FIG. 18, a mobile station is assumed to be capable of communicating via either radio communications system of 3G or LTE.

At U1 in FIG. 18, the mobile station transmits a signal to request connection (radio resource control (RRC) connection request) to a base transceiver station (BTS) that is a 3G base station. The BTS on the 3G side transmits a signal to reject the connection request from the mobile station (RRC Connection Reject) when there is an LTE base station present near the own station and notifies the mobile station of a frequency number for the LTE base station near the mobile station (U2). The frequency number notified at this time is, for example, an E-UTRAN Absolute Radio Frequency Channel Number (EARFCN), and the mobile station searches for an LTE base station with which the own station can communicate from a center frequency identified by such a number. At U3, the mobile station selects an LTE base station of the highest radio wave intensity received as a connection destination out of the LTE base stations searched, and transmits a signal to request connection (RRC connection request) to the base station. Consequently, the mobile station starts to communicate with the LTE base station that is higher in terms of communication speed.

### [Citation List]

### [Patent Literature]

Patent Literature 1: Japanese Laid-open Patent Publication No. 2010-245888
Patent Literature 2: Japanese Laid-open Patent Publication No. 2010-258898

### [Non Patent Literature]

Non Patent Literature 1: 3GPP TS 25.331 V10.2.0 (2010-12)

### [Summary of Invention]

### [Technical Problem]

The above-described technology is effective when the LTE base station is in a communicable state with the mobile station that requested the connection. The 3G base station that rejected the connection, however, notifies the mobile station of the frequency number for the nearby LTE base station, but not considering the feasibility of communication. Consequently, when the LTE base station is unable to communicate with for some reason, the mobile station may not be able to detect the LTE base station as a connection destination even though the frequency number for the LTE base station is received. When the mobile station is unable to detect the LTE base station of the connection destination, the mobile station makes a request to connect with the 3G base station again. However, because the 3G base station has detected the presence of the LTE base station nearby, the 3G base station rejects the connection with the mobile station and prompts the mobile station to connect with the LTE base station. Consequently, the retry of connection between the mobile station and the base station increases, and thus a processing load of the radio communications system that includes the mobile station and the base station increases.

The disclosed technology in one aspect aims to provide a radio communications system, a mobile station, a base station, and a method of radio communication that can reduce the processing load.

### [Solution to Problem]

To solve the above problem and attain the object, a radio communications system disclosed in this application, according to an aspect, includes: a mobile station; a first base station; and a second base station. The first base station communicates with the mobile station using a first communications system. The second base station communicates with the mobile station using a second communications system. The mobile station includes a determining unit and a notifying unit. The determining unit determines feasibility of communication with the second base station using the second communications system. The notifying unit notifies the first base station that the communication with the second base station is not feasible at the time of transmitting a communication request to the first base station when the determining unit determines that the communication is not feasible. The first base station includes a communication unit that communicates with the mobile station using the first communications system in response to the communication request without requesting the mobile station to communicate with the second base station.

### [Advantageous Effects of Invention]

The radio communications system according to one aspect of the embodiment disclosed in the application has an effect to reduce the processing load.

### [Brief Description of Drawings]

FIG. 1 is a block diagram illustrating a functional configuration of a radio communications system.
FIG. 2 is a table illustrating an example of data storage in a communication-quality information storage module.
FIG. 3 is a table illustrating a part of massages transmitted and received by a 3G communication module.
FIG. 4 is a block diagram illustrating a hardware configuration of a mobile station.
FIG. 5 is a block diagram illustrating a hardware configuration of an LTE base station.
FIG. 6 is a flowchart for explaining the operation of the radio communications system when inability to communicate is caused by the occurrence of RLF.
FIG. 7 is a flowchart for explaining the operation of clearing the communication-quality information storage module on the occasion of the mobile station detecting a cell of good communication quality.
FIG. 8 is a flowchart for explaining the operation of clearing the communication-quality information storage module on the occasion of the mobile station starting packet communication normally by the 3G communication module.
FIG. 9 is a flowchart for explaining the operation of the radio communications system when inability to communicate is caused by the occurrence of RLF during handover.
FIG. 10 is a flowchart for explaining the operation of the radio communications system when inability to communicate is caused by a failure in establishing an RRC connection.
FIG. 11 is a flowchart for explaining the operation of the radio communications system when inability to communicate is caused by a failure in establishing a default bearer.
FIG. 12 is a flowchart for explaining the operation of the radio communications system when inability to communicate is caused by a failure in setting an RAB.
FIG. 13 is a flowchart for explaining the operation of the radio communications system when inability to communicate is caused by an LTE cell restriction.
FIG. 14 is a flowchart for explaining the operation of the radio communications system when inability to communicate is caused by an LTE access restriction.
FIG. 15 is a flowchart for explaining the operation of clearing the communication-quality information storage module on the occasion of the mobile station detecting the release of cell restriction or access restriction.
FIG. 16 is a flowchart for explaining the operation of the mobile station generating an RRC connection request destined for the 3G base station.
FIG. 17 is a flowchart for explaining the operation of the 3G base station after the RRC connection request is received from the mobile station.
FIG. 18 is a diagram for explaining a conventional technology of switching radio communications systems.

### [Embodiments for Carrying Out the Invention]

With reference to the accompanying drawings, the following describes in detail an exemplary embodiment of a radio communications system, a mobile station, a base station, and a radio communications method disclosed in the application. The embodiment discussed, however, is not intended to restrict the radio communications system, the mobile station, the base station, and the radio communications method disclosed in the application.

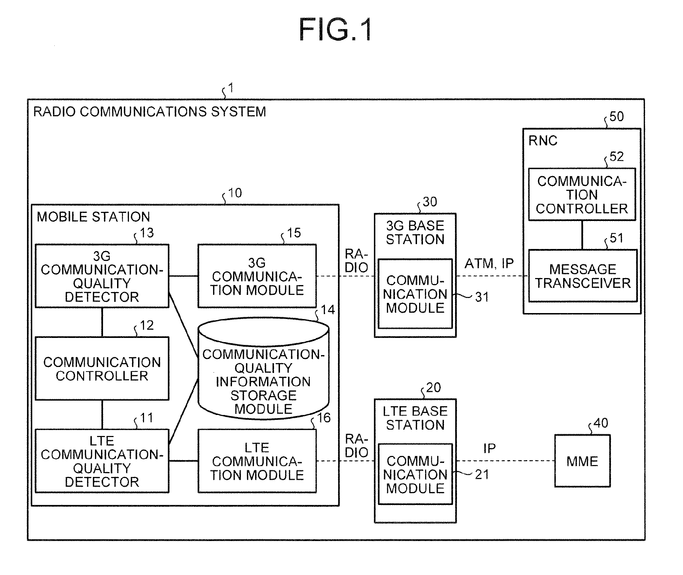

A functional configuration of the radio communications system according to one embodiment disclosed in the application will be described first. FIG. 1 is a block diagram illustrating the configuration of the radio communications system. As illustrated in FIG. 1, a radio communications system 1 includes a mobile station 10, an LTE base station 20, and a 3G base station 30 which will be described later. The mobile station 10 is able to perform radio communication with the respective base stations of the LTE base station 20 and the 3G base station 30. Furthermore, the LTE base station 20 has a wired connection with a mobility management entity (MME) 40 via the Internet protocol (IP). The 3G base station 30 has a wired connection with a radio network controller (RNC) 50 via the asynchronous transfer mode (ATM) or IP.

The mobile station 10 is a terminal capable of communicating with both base stations of the conventional 3G base station 30 and the faster LTE base station 20 (referred to as a dual mode terminal). The mobile station 10 includes, as illustrated in FIG. 1, an LTE communication-quality detector 11, a communication controller 12, a 3G communication-quality detector 13, a communication-quality information storage module 14, a 3G communication module 15, and an LTE communication module 16. Each of the constituent modules in the foregoing is connected with one another so that signals or data can be input and output in one-way or two-way manners.

The LTE communication-quality detector 11 detects poor communication quality in a cell of the LTE base station 20 in communication (hereinafter, abbreviated as an LTE cell as necessary) when a failure factor such as a radio link failure (RLF) occurs during the packet communication with the LTE base station 20. The LTE communication-quality detector 11 outputs the detection result to the communication controller 12. The LTE communication-quality detector 11 notifies the communication controller 12 that an LTE cell is undetectable when the cell in good communication quality is difficult to be detected in the LTE cells.

The communication controller 12 instructs the LTE communication-quality detector 11 to perform cell search to detect the presence of cells in good communication quality in the other LTE cells with which the mobile station 10 can communicate. Likewise, for the cells of the 3G base station 30 (hereinafter, abbreviated as 3G cells as necessary), the communication controller 12 instructs the 3G communication-quality detector 13 to perform cell search to detect the presence of 3G cells in good communication quality. Furthermore, when the communication controller 12 determines that only the 3G cells are usable, the communication controller 12 performs a radio access technology (RAT) change from LTE to 3G. The communication controller 12 instructs the 3G communication module 15 to transmit a message including a radio resource control (RRC) connection request.

When the 3G communication-quality detector 13 detects a cell in good communication quality in the 3G cells with which the mobile station 10 can communicate, the 3G communication-quality detector 13 notifies the communication controller 12 that the 3G cell is detected. The detection of communicable 3G cells and the determination of whether the communication quality is good are performed by the 3G communication-quality detector 13 based on a channel quality indicator (CQI) value of the mobile station 10 itself with respect to the 3G base station 30. More specifically, the 3G communication-quality detector 13 measures the CQI value based on the radio wave intensity received from the 3G base station 30 or a signal-to-interference ratio (SIR) estimate value, and when the value exceeds a given threshold, the communication quality of the 3G cell is determined to be good.

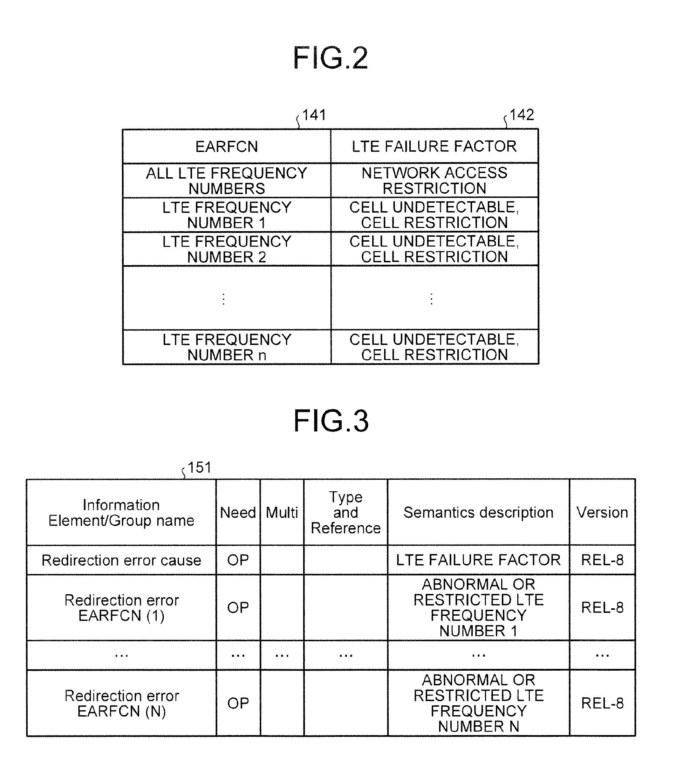

The communication-quality information storage module 14 stores therein, along with the RAT change performed by the communication controller 12, information indicative of LTE cell being undetectable (RAT change information) as a failure factor of LTE cell. FIG. 2 is a table illustrating an example of data storage in the communication-quality information storage module 14. As illustrated in FIG. 2, the communication-quality information storage module 14 includes an EARFCN storage area 141 and an LTE failure-factor storage area 142. The EARFCN storage area 141 stores therein the information to identify a center frequency assigned to each of the LTE base stations as EARFCN. The EARFCN is identified by the last number (1 to n) suffixed to an LTE frequency number. The n is a natural number representing a maximum number of neighboring cells of the LTE base station 20. The LTE failure-factor storage area 142 stores therein the information indicative of a failure factor of the LTE base station having the corresponding EARFCN as LTE failure factor.

For example, when the EARFCN is all LTE frequency numbers, network access restriction is stored as a failure factor for the LTE base stations corresponding to all of the frequency numbers to be incommunicable regardless of the LTE frequency number. In contrast, when the EARFCN is a specific LTE frequency number identified by 1 to n, the information of cell undetectable or cell restriction is stored as an LTE failure factor for only the LTE base station corresponding to the frequency number to be incommunicable. As in the foregoing, the communication-quality information storage module 14 manages the failure factors of the respective LTE base stations for each frequency number that is the identification information thereof.

The 3G communication module 15 transmits and receives various signals including messages to and from the 3G base station 30 via, for example, a 3G radiocommunication technology. FIG. 3 is a table illustrating a part of massages transmitted and received by the 3G communication module 15. The message transmitted and received by the 3G communication module 15 is, for example, an RRC connection request (3G) Rel-8 massage. Furthermore, pre-redirection info 151 that constitutes a part thereof is configured, as illustrated in FIG. 3, with respective data storage areas of information element/group name, need, multi, type and reference, semantics description, and version. The N described in FIG. 3 represents a maximum number of neighboring cells of the LTE base station 20.

The LTE communication module 16 transmits and receives various signals including messages to and from the LTE base station 20 via, for example, an LTE (3.9G) radiocommunication technology.

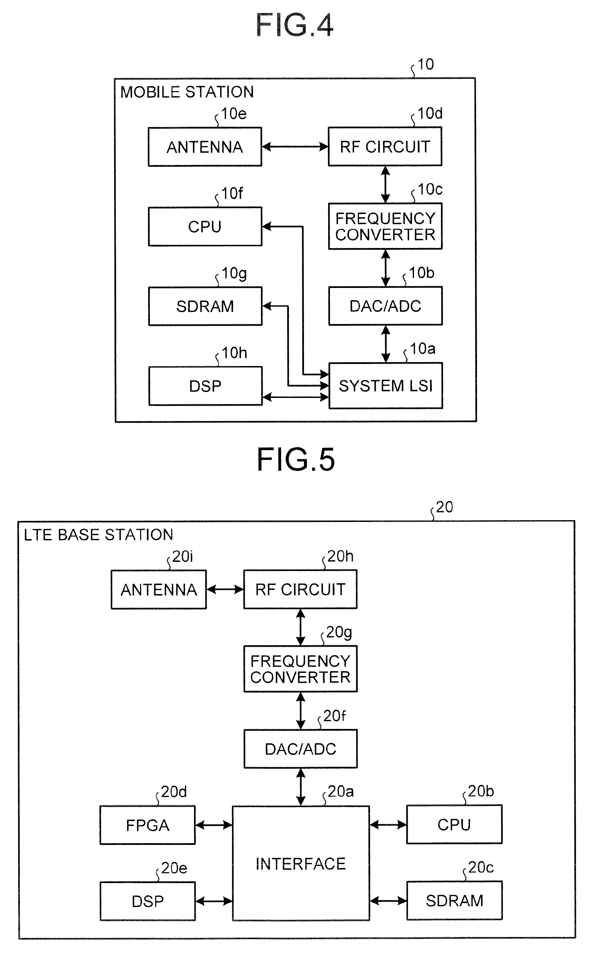

Next describes the hardware configurations of the mobile station 10, the LTE base station 20, and the 3G base station 30. FIG. 4 is a block diagram illustrating the hardware configuration of the mobile station 10. As illustrated in FIG. 4, the mobile station 10 physically includes a system large-scale-integration (LSI) 10a, a digital-to-analog converter (DAC)/analog-to-digital converter (ADC) 10b, a frequency converter 10c, and a radio frequency (RF) circuit 10d. The RF circuit 10d includes an antenna 10e. The mobile station 10 further includes a central processing unit (CPU) 10f, a synchronous dynamic random access memory (SDRAM) 10g, and a digital signal processor (DSP) 10h.

The respective functional constituent elements (see FIG. 1) of the mobile station 10 in the foregoing are implemented by the following hardware (see FIG. 4) described. More specifically, the LTE communication-quality detector 11, the communication controller 12, and the 3G communication-quality detector 13 are implemented by the CPU 10f or the DSP 10h as hardware. The communication-quality information storage module 14 is implemented by the SDRAM 10g. Furthermore, the 3G communication module 15 and the LTE communication module 16 are implemented by the system LSI 10a, the DAC/ADC 10b, the frequency converter 10c, the RF circuit 10d, and the antenna 10e.

Referring back to FIG. 1, the LTE base station 20 includes a communication module 21. The communication module 21 performs radio communication in LTE system with the LTE communication module 16 of the mobile station 10. The 3G base station 30 includes a communication module 31. The communication module 31 performs radio communication in 3G system with the 3G communication module 15 of the mobile station 10. More specifically, when the communication module 31 receives a notice of the communication with the LTE base station 20 being not feasible when receiving a communication request from the mobile station 10, the communication module 31 communicates with the mobile station 10 using the 3G system in response to the communication request without requesting the mobile station 10 to communicate with the LTE base station 20.

FIG. 5 is a block diagram illustrating the hardware configuration of the LTE base station 20. As illustrated in FIG. 5, in the base station 20, a CPU 20b, an SDRAM 20c, a field programmable gate array (FPGA) 20d, and a DSP 20e are physically connected with one another via an interface 20a such as switches so that various signals and a variety of data can be input and output. Furthermore, the LTE base station 20 physically includes a DAC/ADC 20f, a frequency converter 20g, and an RF circuit 20h. The RF circuit 20h includes an antenna 20i. While the hardware configuration of the LTE base station 20 has been described above, the 3G base station 30 physically includes the same hardware configuration as that of the LTE base station 20, and thus the same reference signs are used for the common constituent elements and their explanations in detail are omitted.

The communication module 21 of the LTE base station 20 (see FIG. 1) is implemented by the DAC/ADC 20f, the frequency converter 20g, the RF circuit 20h, and the antenna 20i (see FIG. 5) as hardware. Furthermore, the communication module 31 of the 3G base station 30 (see FIG. 1) is implemented by the DAC/ADC 20f, the frequency converter 20g, the RF circuit 20h, and the antenna 20i (see FIG. 5) as hardware.

An RNC 50 includes, as illustrated in FIG. 1, a message transceiver 51 and a communication controller 52. The respective constituent modules in the foregoing are connected with each other so that signals or data can be input and output in one-way or two-way manners. The message transceiver 51, for example, receives a message transmitted from the mobile station 10 via the 3G base station 30, and outputs the message received to the communication controller 52. The communication controller 52, for example, analyzes the message input from the message transceiver 51, and when the message is an RRC connection request, determines whether the request is for packet communication and whether the mobile station of the transmission source supports LTE communication. When the both are true as a result of the determination, the communication controller 52 checks for the above-described redirection error cause information in the RRC connection request.

Next, the operation of the radio communications system 1 will be described for each factor (failure factor) that results in inability to communicate.

### (1. Inability to Communicate Caused by Occurrence of RLF)

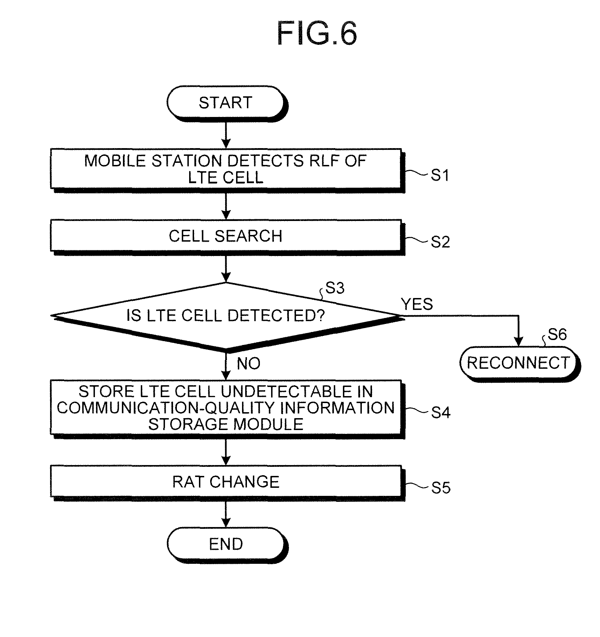

FIG. 6 is a flowchart illustrating the operation of the radio communications system when inability to communicate is caused by the occurrence of RLF. When the LTE communication-quality detector 11 (the CPU 10f or the DSP 10h) of the mobile station 10 detects an RLF of LTE cell during the packet communication with the LTE base station 20 (31), the LTE communication-quality detector 11 searches for another cell that is connectable (cell search) (S2). As a result of the search, when the mobile station 10 detects a 3G cell (No at S3), the mobile station 10 stores the information of LTE cell being undetectable in the communication-quality information storage module 14 (the SDRAM 10g) (S4). The information of LTE cell being undetectable is stored in the LTE failure-factor storage area 142 of the communication-quality information storage module 14 as the information representing that the mobile station 10 made an RAT change of radio communications systems with base station from LTE to 3G. Consequently, the process of RAT change in the mobile station 10 is completed (S5). Meanwhile, at S3, when the LTE communication-quality detector 11 (the CPU 10f or the DSP 10h) of the mobile station 10 detects another connectable LTE cell (Yes at S3), the LTE communication module 16 (the system LSI 10a, the DAC/ADC 10b, the frequency converter 10c, the RF circuit 10d, and the antenna 10e) reconnects (performs handover) with the LTE base station the cell of which defines the communication area thereof (S6).

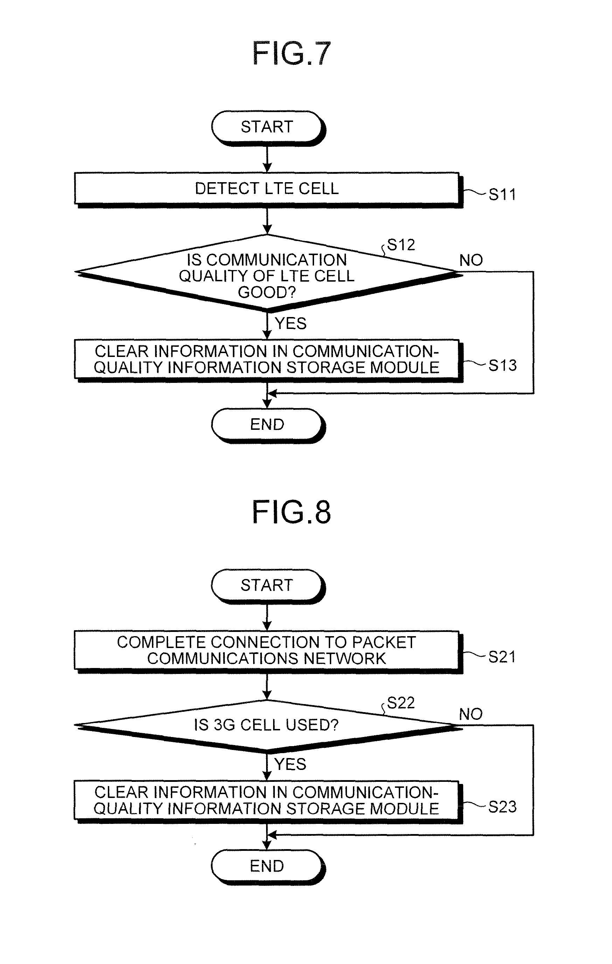

FIG. 7 is a flowchart for explaining the operation of clearing the communication-quality information storage module 14 on the occasion of the mobile station 10 detecting a cell of good communication quality. When the LTE communication-quality detector 11 (the CPU 10f or the DSP 10h) of the mobile station 10 detects a communicable LTE cell during the packet communication (S11), the LTE communication-quality detector 11 determines whether the communication quality of the LTE cell is good (S12). The respective processes at S11 and S12 are performed by the LTE communication-quality detector 11 based on the radio wave intensity received from the LTE base station 20 and an SIR estimate value. As a result of the determination, when the communication quality of the LTE cell is good (Yes at S12), the LTE communication-quality detector 11 (the CPU 10f or the DSP 10h) of the mobile station 10 clears the information of LTE failure factor or EARFCN stored in the communication-quality information storage module 14 (S13). Consequently, the communication-quality information storage module 14 is initialized. Meanwhile, as a result of the determination at S12, when the communication quality of the LTE cell is not good (No at S12), the LTE communication-quality detector 11 (the CPU 10f or the DSP 10h) of the mobile station 10 finishes a series of processes without clearing the communication-quality information storage module 14.

FIG. 8 is a flowchart for explaining the operation of clearing the communication-quality information storage module 14 on the occasion of the mobile station starting the packet communication normally by the 3G communication module. When the 3G communication module 15 (the system LSI 10a, the DAC/ADC 10b, the frequency converter 10c, the RF circuit 10d, and the antenna 10e) of the mobile station 10 completes the connection to a packet communications network (S21), the 3G communication module 15 determines whether the packet communication is with the 3G base station 30 (S22). As a result of the determination, when the communication is with the 3G base station 30 (Yes at S22), the 3G communication-quality detector 13 (the CPU 10f or the DSP 10h) of the mobile station 10 clears the information of LTE failure factor or EARFCN stored in the communication-quality information storage module 14 (S23). Consequently, the communication-quality information storage module 14 is initialized. Meanwhile, as a result of the determination at S22, when the communication is not with the 3G base station 30 (No at S22), the 3G communication-quality detector 13 (the CPU 10f or the DSP 10h) of the mobile station 10 finishes the process without clearing the communication-quality information storage module 14.

### (2. Inability to Communicate Caused by Occurrence of RLF during Handover (Handover Failure))

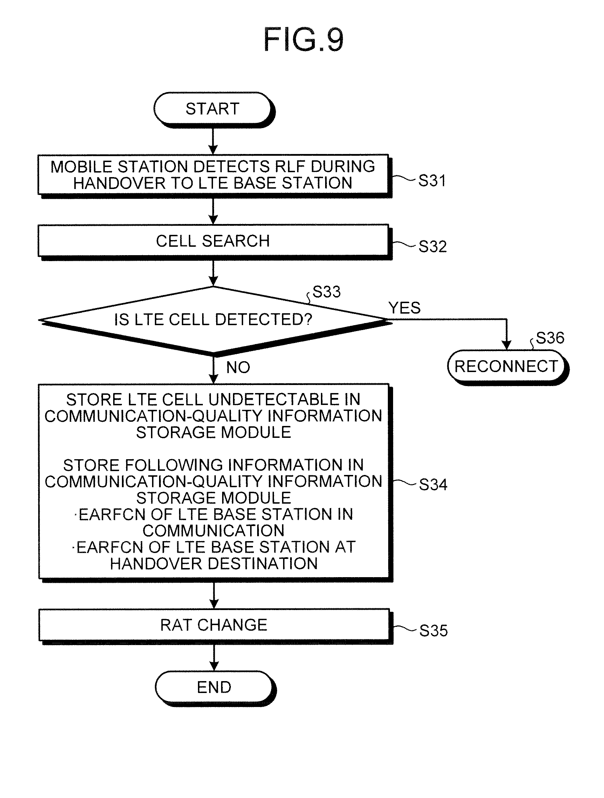

FIG. 9 is a flowchart illustrating the operation of the radio communications system when inability to communicate is caused by the occurrence of RLF during handover. When the LTE communication-quality detector 11 (the CPU 10f or the DSP 10h) of the mobile station 10 detects an RLF of LTE cell during the packet communication with the LTE base station 20 and during the process of handover (S31), the LTE communication-quality detector 11 searches for another cell that is connectable (cell search) (S32). As a result of the search, when the mobile station 10 detects a 3G cell (No at S33), the mobile station 10 stores the information of LTE cell being undetectable in the communication-quality information storage module 14 (the SDRAM 10g) (S34). The information of LTE cell being undetectable is stored in the LTE failure-factor storage area 142 of the communication-quality information storage module 14 as the information representing that the mobile station 10 made an RAT change of radio communications systems with base station from LTE to 3G. In addition, the mobile station 10 stores the EARFCN of the LTE base station 20 of handover source in communication and the EARFCN of the LTE base station of handover destination in the EARFCN storage area 141 of the communication-quality information storage module 14 (S34). Consequently, the mobile station 10 completes the process of RAT change (S35). Meanwhile, at S33, when the LTE communication-quality detector 11 (the CPU 10f or the DSP 10h) of the mobile station 10 detects another LTE cell that is connectable (Yes at S33), the LTE communication module 16 (the system LSI 10a, the DAC/ADC 10b, the frequency converter 10c, the RF circuit 10d, and the antenna 10e) reconnects (performs handover) with the LTE base station the cell of which defines the communication area thereof (S36).

### (3. Inability to Communicate Caused by Failure in Establishing RRC Connection)

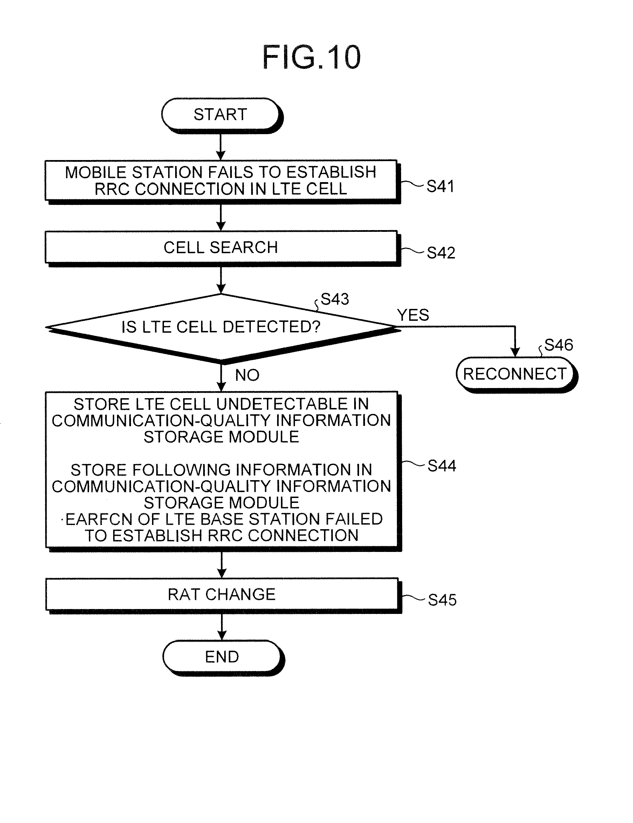

FIG. 10 is a flowchart for explaining the operation of the radio communications system when inability to communicate is caused by a failure in establishing an RRC connection. When the LTE communication module 16 (the system LSI 10a, the DAC/ADC 10b, the frequency converter 10c, the RF circuit 10d, and the antenna 10e) of the mobile station 10 fails to establish an RRC connection while staying in the area of an LTE cell (S41), the LTE communication-quality detector 11 (the CPU 10f or the DSP 10h) searches for another cell that is connectable (cell search) (S42). As a result of the search, when the mobile station 10 detects a 3G cell (No at S43), the mobile station 10 stores the information of LTE cell being undetectable in the communication-quality information storage module 14 (the SDRAM 10g) (S44). The information of LTE cell being undetectable is stored in the LTE failure-factor storage area 142 of the communication-quality information storage module 14 as the information representing that the mobile station 10 made an RAT change of radio communications systems with base station from LTE to 3G. In addition, the mobile station 10 stores the EARFCN of the LTE base station with which the establishment of RRC connection is failed in the EARFCN storage area 141 of the communication-quality information storage module 14 (S44). Consequently, the mobile station 10 completes the process of RAT change by the communication controller 12 (S45). Meanwhile, at S43, when the LTE communication-quality detector 11 (the CPU 10f or the DSP 10h) of the mobile station 10 detects another LTE cell that is connectable (Yes at S43), the LTE communication module 16 (the system LSI 10a, the DAC/ADC 10b, the frequency converter 10c, the RF circuit 10d, and the antenna 10e) reconnects (performs handover) with the LTE base station the cell of which defines the communication area thereof (S46).

### (4. Inability to Communicate Caused by Failure in Establishing Default Bearer)

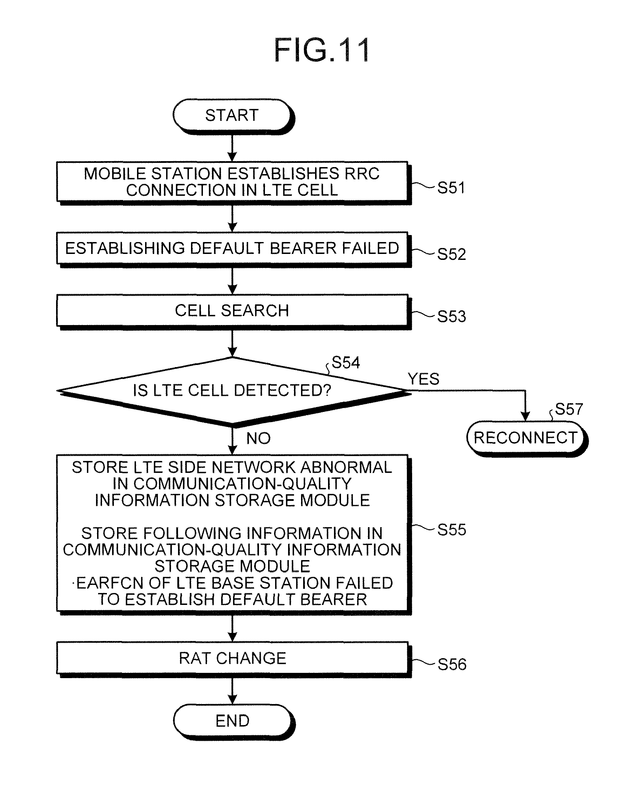

FIG. 11 is a flowchart illustrating the operation of the radio communications system when inability to communicate is caused by the failure in establishing a default bearer. It is assumed that the LTE communication module 16 (the system LSI 10a, the DAC/ADC 10b, the frequency converter 10c, the RF circuit 10d, and the antenna 10e) of the mobile station 10 normally established an RRC connection while staying in the area of an LTE cell (S51). Thereafter, when the communication controller 12 (the CPU 10f or the DSP 10h) fails to establish a default bearer among the mobile station 10, the LTE base station 20, and the MME 40 for some reason for a given period of time (S52) before the mobile station 10 starts to communicate with the LTE base station 20, the communication controller 12 starts the search for another cell that is connectable (cell search) (S53). As a result of the search, when the 3G communication-quality detector 13 detects a 3G cell (No at S54), the mobile station 10 stores the information of LTE side network being abnormal in the communication-quality information storage module 14 (the SDRAM 10g) (S55). The information of LTE side network being abnormal is stored in the LTE failure-factor storage area 142 of the communication-quality information storage module 14 as the information indicating that the mobile station 10 made an RAT change of radio communications systems with base station from LTE to 3G. In addition, the mobile station 10 stores the EARFCN of the LTE base station with which the establishment of default bearer is failed in the EARFCN storage area 141 of the communication-quality information storage module 14 (S55). Consequently, the mobile station 10 completes the process of RAT change by the communication controller 12 (S56). Meanwhile, at S54, when the LTE communication-quality detector 11 (the CPU 10f or the DSP 10h) detects another LTE cell that is connectable (Yes at S54), the LTE communication module 16 (the system LSI 10a, the DAC/ADC 10b, the frequency converter 10c, the RF circuit 10d, and the antenna 10e) reconnects (performs handover) with the LTE base station the cell of which defines the communication area thereof (S57).

### (5. Inability to Communicate Caused by Failure in Setting RAB)

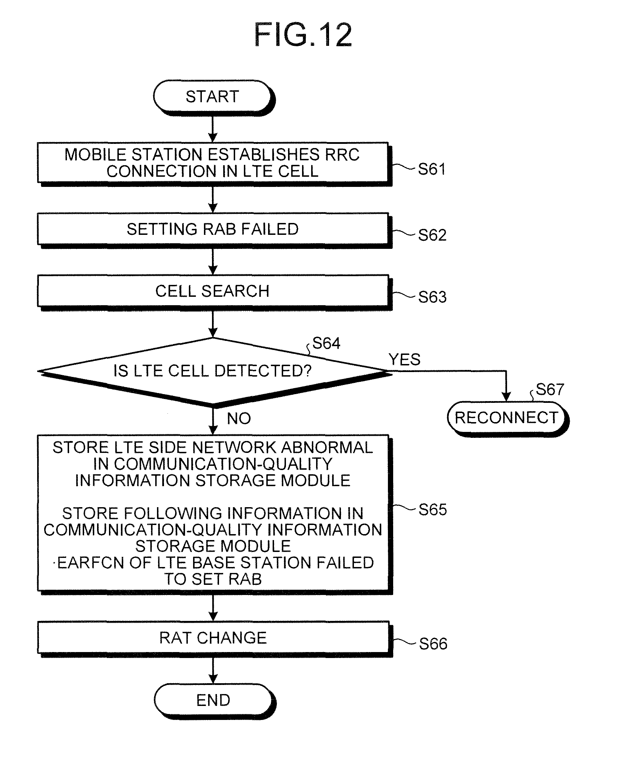

FIG. 12 is a flowchart illustrating the operation of the radio communications system when communication inability is caused by a failure in setting a radio access bearer (RAB). It is assumed that the LTE communication module 16 (the system LSI 10a, the DAC/ADC 10b, the frequency converter 10c, the RF circuit 10d, and the antenna 10e) of the mobile station 10 established an RRC connection normally while staying in the area of an LTE cell (S61). Thereafter, when the communication controller 12 (the CPU 10f or the DSP 10h) fails to set an RAB among the mobile station 10, the LTE base station 20, and the MME 40 for some reason (S62) before the mobile station 10 starts communicating with the LTE base station 20, the communication controller 12 starts the search for another cell that is connectable (cell search) (S63). As a result of the search, when the 3G communication-quality detector 13 detects a 3G cell (No at S64), the mobile station 10 stores the information of LTE side network being abnormal in the communication-quality information storage module 14 (the SDRAM 10g) (S65). The information of LTE side network being abnormal is stored in the LTE failure-factor storage area 142 of the communication-quality information storage module 14 as the information representing that the mobile station 10 made an RAT change of radio communications systems with base station from LTE to 3G. The mobile station 10 further stores the EARFCN of the LTE base station with which the setting an RAB is failed in the EARFCN storage area 141 of the communication-quality information storage module 14 (S65). Consequently, the mobile station 10 completes the process of RAT change (S66). Meanwhile, at S64, when the LTE communication-quality detector 11 (the CPU 10f or the DSP 10h) detects another LTE cell that is connectable (Yes at S64), the LTE communication module 16 (the system LSI 10a, the DAC/ADC 10b, the frequency converter 10c, the RF circuit 10d, and the antenna 10e) reconnects (performs handover) with the LTE base station the cell of which defines the communication area thereof (S67).

### (6. Inability to Communicate Caused by LTE Cell Restriction)

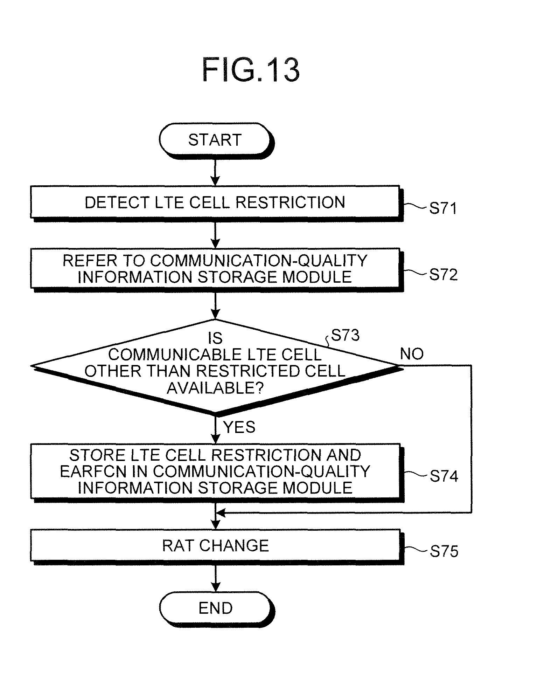

FIG. 13 is a flowchart illustrating the operation of the radio communications system when inability to communicate is caused by the restriction of LTE cell. When the communication controller 12 (the CPU 10f or the DSP 10h) of the mobile station 10 detects the restriction of LTE cell in an RRC idle state standing by for an LTE cell (S71), the communication controller 12 refers to the communication-quality information storage module 14 (S72) to determine whether a communicable LTE cell other than the cell currently in restriction is available (S73). As a result of the determination, when the other communicable LTE cell is available (Yes at S73), the mobile station 10 stores the information of LTE cell restriction and the EARFCN of the cell in the communication-quality information storage module 14 (the SDRAM 10g) (S74). The information of LTE cell restriction is stored in the LTE failure-factor storage area 142 of the communication-quality information storage module 14 as the information representing that the mobile station 10 made an RAT change of radio communications systems with base station from LTE to 3G. Furthermore, the information of the EARFCN of the cell in restriction is stored in the EARFCN storage area 141 of the communication-quality information storage module 14 (the SDRAM 10g). Consequently, the process of RAT change in the mobile station 10 is completed (S75). Meanwhile, at S73, when there is no LTE cell that is not in restriction and is connectable present (No at S73), the mobile station 10 omits the above-described process at S74 and moves on to the process at S75.

### (7. Inability to Communicate Caused by LTE Access Restriction)

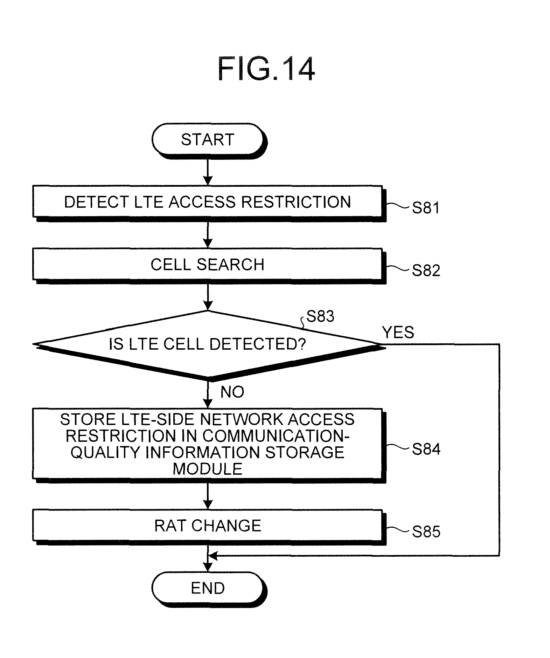

FIG. 14 is a flowchart illustrating the operation of the radio communications system when inability to communicate is caused by the restriction in LTE access. When the communication controller 12 (the CPU 10f or the DSP 10h) of the mobile station 10 receives a notice of restriction in LTE access from the LTE network side (the LTE base station 20 and the MME 40) in an RRC idle state standing by for an LTE cell (S81), the communication controller 12 searches for another cell that is connectable (cell search) (S82). As a result of the search, when the mobile station 10 detects a 3G cell (No at S83), the mobile station 10 stores the information of LTE-side network access restriction in the communication-quality information storage module 14 (the SDRAM 10g) (S84). The information of LTE-side network access restriction is stored in the LTE failure-factor storage area 142 of the communication-quality information storage module 14 as the information representing that the mobile station 10 made an RAT change of radio communications systems with base station from LTE to 3G. Consequently, the mobile station 10 completes the process of RAT change by the communication controller 12 (S85). Meanwhile, at S83, when the mobile station 10 detects the LTE cell (Yes at S83), the mobile station 10 omits the respective processes at S84 and S85 in the foregoing and finishes a series of processes.

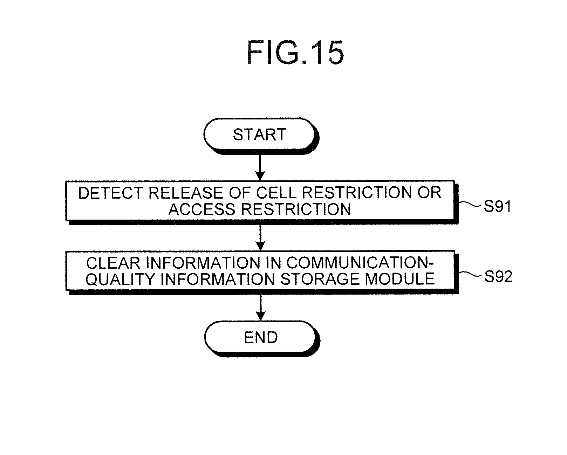

FIG. 15 is a flowchart for explaining the operation of clearing the communication-quality information storage module 14 on the occasion of the mobile station 10 detecting the release of cell restriction or access restriction. When the LTE communication-quality detector 11 (the CPU 10f or the DSP 10h) of the mobile station 10 detects the release of cell restriction or access restriction in LTE during the packet communication (S91), the LTE communication-quality detector 11 clears the information of LTE failure factor or EARFCN stored in the communication-quality information storage module 14 (S92). Consequently, the communication-quality information storage module 14 is initialized.

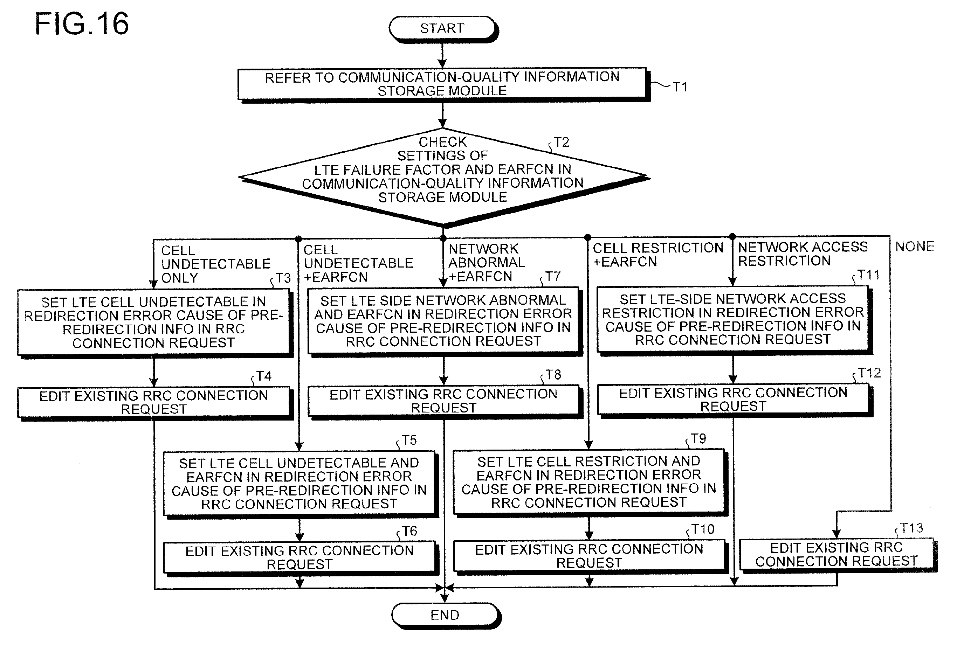

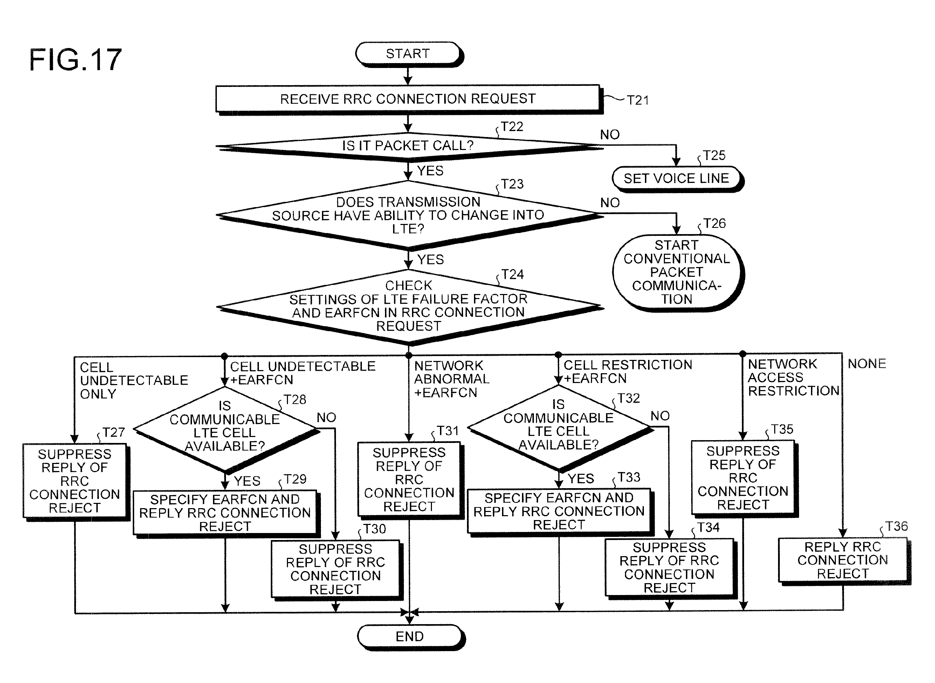

Next, the process of transmitting and receiving an RRC connection request performed between the mobile station 10 and the 3G base station 30 will be described with reference to FIGS. 16 and 17.

FIG. 16 is a flowchart for explaining the operation of the mobile station 10 to generate an RRC connection request destined for the 3G base station 30. At T1, the communication controller 12 (the CPU 10f or the DSP 10h) of the mobile station 10 refers to the communication-quality information storage module 14 before transmitting an RRC connection request (T1), and checks the current settings of LTE failure factor and EARFCN (T2). When the information stored in the communication-quality information storage module 14 is only cell being undetectable, the communication controller 12 (the CPU 10f or the DSP 10h) of the mobile station 10 sets the information of LTE cell being undetectable in a redirection error cause area of the pre-redirection info 151 (see FIG. 3) included in the RRC connection request (T3). This completes the editing of the existing RRC connection request (T4).

As a result of the setting check at T2, when the information stored in the communication-quality information storage module 14 is cell being undetectable and EARFCN, the communication controller 12 (the CPU 10f or the DSP 10h) of the mobile station 10 sets the following information to an RRC connection request (T5). More specifically, the communication controller 12 (the CPU 10f or the DSP 10h) of the mobile station 10 sets the respective pieces of information of LTE cell being undetectable and the EARFCN corresponding to the cell in the redirection error cause area of the pre-redirection info 151 (see FIG. 3) included in the RRC connection request. This completes the editing of the existing RRC connection request (T6).

More as a result of the setting check at T2, when the information stored in the communication-quality information storage module 14 is network being abnormal and EARFCN in LTE, the communication controller 12 (the CPU 10f or the DSP 10h) of the mobile station 10 sets the following information to an RRC connection request (T7). More specifically, the communication controller 12 (the CPU 10f or the DSP 10h) of the mobile station 10 sets the respective pieces of information of LTE side network being abnormal and the EARFCN corresponding to the abnormality in the redirection error cause area of the pre-redirection info 151 (see FIG. 3) included in the RRC connection request. This completes the editing of the existing RRC connection request (T8).

Moreover, as a result of the setting check at T2, when the information stored in the communication-quality information storage module 14 is cell restriction and EARFCN in LTE, the communication controller 12 (the CPU 10f or the DSP 10h) of the mobile station 10 sets the following information to an RRC connection request (T9). More specifically, the communication controller 12 (the CPU 10f or the DSP 10h) of the mobile station 10 sets the respective pieces of information of LTE cell restriction and the EARFCN corresponding to the restricted cell in the redirection error cause area of the pre-redirection info 151 (see FIG. 3) included in the RRC connection request. This completes the editing of the existing RRC connection request (T10).

Furthermore, as a result of the setting check at T2, when the information stored in the communication-quality information storage module 14 is network access restriction in LTE, the communication controller 12 (the CPU 10f or the DSP 10h) of the mobile station 10 sets the following information to an RRC connection request (T11). More specifically, the communication controller 12 (the CPU 10f or the DSP 10h) of the mobile station 10 sets the information of LTE-side network access restriction in the redirection error cause area of the pre-redirection info 151 (see FIG. 3) included in the RRC connection request. This completes the editing of the existing RRC connection request (T12).

Meanwhile, when there is no information stored in the EARFCN storage area 141 and the LTE failure-factor storage area 142 of the communication-quality information storage module 14 as a result of the setting check at T2, the communication controller 12 (the CPU 10f or the DSP 10h) of the mobile station 10 completes the editing of the existing RRC connection request in a state of no information being set in the redirection error cause area of the RRC connection request (T13). The RRC connection request the editing of which is completed is transmitted from the mobile station 10 to the 3G base station 30 by the 3G communication module 15.

FIG. 17 is a flowchart for explaining the operation of the 3G base station 30 after an RRC connection request is received from the mobile station 10. At T21, the communication module 31 (the DAC/ADC 20f, the frequency converter 20g, the RF circuit 20h, and the antenna 20i) of the 3G base station 30 receives an RRC connection request signal transmitted from the mobile station 10. The 3G base station 30 determines whether the call requested by the signal is a packet call (T22). As a result of the determination, when the call requested by the RRC connection request is a packet call (Yes at T22), the 3G base station 30 determines whether the mobile station 10 of the transmission source can communicate in LTE (have ability to change into LTE) based on the information included in the signal (T23). In the present embodiment, the LTE communication module 16 (the system LSI 10a, the DAC/ADC 10b, the frequency converter 10c, the RF circuit 10d, and the antenna 10e) of the mobile station 10 is capable of communicating with LTE base stations including the LTE base station 20, and thus the communication module 31 (the DAC/ADC 20f, the frequency converter 20g, the RF circuit 20h, and the antenna 20i) of the 3G base station 30 checks the setting content of LTE failure factor and EARFCN in the RRC connection request transmitted from the mobile station 10 (T24).

Meanwhile, as a result of the determination at T22, when the connection request call is a voice call (No at T22), the 3G base station 30 sets up a line for voice communication with the mobile station 10 (T25). Furthermore, as a result of the determination at T23, when the mobile station requested the connection is determined not to have the ability to change into LTE (No at T23), the communication module 31 (the DAC/ADC 20f, the frequency converter 20g, the RF circuit 20h, and the antenna 20i) of the 3G base station 30 starts conventional packet communication with the mobile station 10 (T26).

Then, as a result of the setting check at T24, when the information of LTE failure factor or EARFCN included in the RRC connection request that the 3G base station 30 received at T21 is only cell being undetectable, the 3G base station 30 performs the following operation. More specifically, the communication module 31 (the DAC/ADC 20f, the frequency converter 20g, the RF circuit 20h, and the antenna 20i) of the 3G base station 30 suppresses the reply of a signal to reject the connection request from the mobile station 10 (RRC connection reject) even when the mobile station 10 has the ability to change into LTE (T27). Consequently, the communication module 31 of the 3G base station 30 starts the packet communication with the mobile station 10 according to the connection request from the mobile station 10.

Furthermore, as a result of the setting check at T24, when the RRC connection request includes the respective pieces of information of cell being undetectable and EARFCN, the 3G base station 30 performs the following operation. More specifically, the 3G base station 30 determines whether a communicable LTE cell of the mobile station 10 is available based on the information of the EARFCN (T28). As a result of the determination, when the communicable LTE cell of the mobile station 10 is available (Yes at T28), the communication module 31 (the DAC/ADC 20f, the frequency converter 20g, the RF circuit 20h, and the antenna 20i) of the 3G base station 30 replies to the mobile station 10 with the EARFCN of the LTE base station that the mobile station 10 can communicate with being carried on a signal to reject the connection request (RRC connection reject) (T29). When the LTE communication module 16 (the system LSI 10a, the DAC/ADC 10b, the frequency converter 10c, the RF circuit 10d, and the antenna 10e) of the mobile station 10 receives the RRC connection reject signal, the LTE communication module 16 determines the LTE base station to be a new connection destination based on the EARFCN included in the signal and starts the packet communication with the LTE base station. Meanwhile, as a result of the determination at T28, when there is no LTE cell that the mobile station 10 can communicate with available (No at T28), the 3G base station 30 performs the following operation. More specifically, the communication module 31 (the DAC/ADC 20f, the frequency converter 20g, the RF circuit 20h, and the antenna 20i) of the 3G base station 30 suppresses the reply to the RRC connection request signal transmitted from the mobile station 10 (transmission of RRC connection reject) even when the mobile station 10 has the ability to change into LTE (T30). Consequently, the communication module 31 of the 3G base station 30 starts the packet communication with the mobile station 10 according to the connection request from the mobile station 10.

Furthermore, as a result of the setting check at T24, when the RRC connection request received by the 3G base station 30 at T21 includes the respective pieces of information of network being abnormal and EARFCN in LTE, the 3G base station 30 performs the following operation. More specifically, the communication module 31 (the DAC/ADC 20f, the frequency converter 20g, the RF circuit 20h, and the antenna 20i) of the 3G base station 30 starts the packet communication with the mobile station 10 according to the connection request without replying a signal to reject the connection request from the mobile station 10 (RRC connection reject) (T31).

Furthermore, as a result of the setting check at T24, when the RRC connection request includes the respective pieces of information of cell restriction and EARFCN in LTE, the 3G base station 30 performs the following operation. More specifically, the 3G base station 30 determines whether a LTE cell that the mobile station 10 can communicate with is available based on the information of EARFCN (T32). As a result of the determination, when the LTE cell that the mobile station 10 can communicate with is available (Yes at T32), the communication module 31 (the DAC/ADC 20f, the frequency converter 20g, the RF circuit 20h, and the antenna 20i) of the 3G base station 30 replies to the mobile station 10 with the EARFCN of the LTE base station that the mobile station 10 can communicate with being carried on a signal to reject the connection request (RRC connection reject) (T33). When the LTE communication module 16 (the system LSI 10a, the DAC/ADC 10b, the frequency converter 10c, the RF circuit 10d, and the antenna 10e) of the mobile station 10 receives the RRC connection reject signal, the LTE communication module 16 determines the LTE base station to be a new connection destination based on the EARFCN included in the signal and starts the packet communication with the LTE base station. Meanwhile, as a result of the determination at T32, when there is no LTE cell that the mobile station 10 can communicate with available (No at T32), the 3G base station 30 performs the following operation. More specifically, the communication module 31 (the DAC/ADC 20f, the frequency converter 20g, the RF circuit 20h, and the antenna 20i) of the 3G base station 30 starts the packet communication with the mobile station 10 according to the connection request from the mobile station 10 without replying to the RRC connection request signal (transmission of RRC connection reject) transmitted from the mobile station 10 (T34).

Furthermore, as a result of the setting check at T24, when the RRC connection request received by the 3G base station 30 at T21 includes the information of network access restriction in LTE, the 3G base station 30 performs the following operation. More specifically, the communication module 31 (the DAC/ADC 20f, the frequency converter 20g, the RF circuit 20h, and the antenna 20i) of the 3G base station 30 starts the packet communication with the mobile station 10 according to the connection request without replying a signal to reject the connection request from the mobile station 10 (RRC connection reject) (T35).

Meanwhile, as a result of the setting check at T24, when the RRC connection request that the 3G base station 30 received at T21 includes no information of LTE failure factor or EARFCN, the 3G base station 30 performs the following operation. More specifically, the communication module 31 (the DAC/ADC 20f, the frequency converter 20g, the RF circuit 20h, and the antenna 20i) of the 3G base station 30 replies to the mobile station 10 with a signal to reject the connection request from the mobile station 10 (RRC connection reject) (T36).

As explained in the foregoing, the radio communications system 1 according to the present embodiment includes the mobile station 10, the 3G base station 30 that communicates with the mobile station 10 using a 3G system, and the LTE base station 20 that communicates with the mobile station 10 using an LTE system. The mobile station 10 includes the communication controller 12 and the 3G communication module 15. The communication controller 12 determines the feasibility of communication with the LTE base station 20 using the LTE system. When the communication controller 12 determines that the communication with the LTE base station 20 is not feasible, the 3G communication module 15 notifies the 3G base station 30 of the communication with the LTE base station 20 being not feasible at the time of transmitting a communication request to the 3G base station 30. The 3G base station 30 communicates with the mobile station 10 using the 3G system in response to the communication request without requesting the mobile station 10 to communicate with the LTE base station 20. More specifically, in the radio communications system 1, when the mobile station 10 is in a state in which performing the radio communication with the LTE base station 20 is not feasible due to various failure factors and makes an RAT change from LTE to 3G, the mobile station 10 connects with the 3G base station 30 or another LTE base station by the above-described procedures. Consequently, the radio communications system 1 provides the reduction of a network load and the reduction of a connection delay between the mobile station 10 and the base station, and achieves the improvement of service performance in call processing.

When the mobile station 10 transmits a communication request to the 3G base station 30, the mobile station 10 notifies the 3G base station 30 of the frequency number of the LTE base station 20. This allows the 3G base station 30 to easily identify that, based on the frequency number of the LTE base station 20, the mobile station 10 is unable to communicate with the LTE base station 20 having which frequency number. The 3G base station 30 further detects LTE base stations at the periphery of the own station, and determines whether there is an LTE base station of a frequency number other than that of the LTE base station 20 available in the LTE base stations detected. As a result of the determination, when there is an LTE base station of the frequency number other than that of the LTE base station 20 available, the 3G base station 30 rejects the communication with the mobile station 10 and notifies the mobile station 10 of the frequency number of the LTE base station. Consequently, the 3G base station 30 prompts the mobile station 10 to connect with the LTE base station of the frequency number different from the frequency number at which the communication is not feasible. In contrast, when there is no LTE base station of the frequency number other than that of the LTE base station 20 available as a result of the determination, the 3G base station 30 starts the communication with the mobile station 10 without rejecting the communication with the mobile station 10. As a consequence, even when the mobile station 10 is unable to communicate with the LTE base station 20, the mobile station 10 can start the communication with the other LTE base station of higher communication quality than that of the 3G base station 30 as much as possible.

In the present embodiment, the 3G communication module 15 of the mobile station 10 transmits an RRC connection request together with not the identification information of the LTE base station 20 that is incommunicable but the EARFCN that is the center frequency of the LTE base station 20 to the 3G base station 30. When the 3G base station 30 receives the EARFCN transmitted from the mobile station 10, the 3G base station 30 checks for an LTE base station of the center frequency other than the EARFCN out of the LTE base stations at the periphery of the LTE base station 20. When there is no peripheral LTE base station having an EARFCN other than that notified from the mobile station 10 available, the 3G base station 30 connects to the mobile station 10. In contrast, when there is a peripheral LTE base station having an EARFCN other than the EARFCN notified from the mobile station 10 available, the 3G base station 30 replies to the mobile station 10 with the EARFCN of such an LTE base station. The mobile station 10 that received the reply of EARFCN selects an LTE base station of good communication quality based on the radio wave intensity received and an SIR estimate value out of a plurality of LTE base stations assigned with the center frequency identified by the EARFCN. The LTE communication-quality detector 11 performs the selecting process. The mobile station 10 then starts the communication with the LTE base station by the LTE communication module 16.

More specifically, the mobile station 10 does not directly receive a notice of LTE base station ID from the 3G base station 30 but once receives a notice of EARFCN, and regards the LTE base stations with the EARFCN as the center frequency thereof as candidates of connection destination. The number of LTE base stations to be the candidates of connection destination is, for example, eight for a single EARFCN. The mobile station 10 further specifies, by the LTE communication-quality detector 11, the LTE base station of the best communication quality as a communication partner out of the LTE base stations narrowed down as the candidates of connection destination. The communication environment of the mobile station 10 varies from hour to hour by certain conditions such as moving velocity, and the presence of shielding, interference, and reflection. It is therefore difficult for the 3G base station 30 side to accurately comprehend which base station out of the peripheral LTE base stations is most desirable for the mobile station 10 to communicate with, and to notify the mobile station 10 about that. In other words, suppose that when the 3G base station 30 specifies the ID of an LTE base station to be the connection destination of the mobile station 10, the LTE base station may not be the best communication partner for the mobile station 10. Consequently, in the radio communications system 1 in the present embodiment, the notice from the 3G base station 30 to the mobile station 10 is kept to the notice of EARFCN, and the mobile station 10 itself is made to select the best base station out of the LTE base stations having the EARFCN notified. This allows the mobile station 10 to select another LTE base station that is most appropriate for the mobile station 10 as a communication partner even when the mobile station 10 is unable to communicate with the LTE base station 20. Consequently, the mobile station 10 can perform the packet communication with an LTE base station of higher communication quality out of the LTE base stations capable of performing faster communication than the 3G base station 30. As a result, speeding up of the radio communications system 1 can be achieved.

The above-described operations of the radio communications system in response to the respective failure factors are not restricted to be performed separately, and a plurality of operations in combination may be performed. Furthermore, the number and sequence of combinations thereof are selectable appropriately.

### [Explanation of Reference]

- 1: radio communications system
- 10: mobile station
- 10a: system LSI
- 10b: DAC/ADC
- 10c: frequency converter
- 10d: RF circuit
- 10e: antenna
- 11: LTE communication-quality detector
- 12: communication controller
- 13: 3G communication-quality detector
- 14: communication-quality information storage module
- 141: EARFCN storage area
- 142: LTE failure-factor storage area
- 15: 3G communication module
- 16: LTE communication module
- 20: LTE base station
- 20a: interface
- 20b: CPU
- 20c: SDRAM
- 20d: FPGA
- 20e: DSP
- 20f: DAC/ADC
- 20g: frequency converter
- 20h: RF circuit
- 20i: antenna
- 21: communication module
- 30: 3G base station
- 31: communication module
- 40: MME
- 50: RNC
- 51: message transceiver
- 52: communication controller

## Claims

1. A radio communications system comprising:
a mobile station;
a first base station that communicates with the mobile station using a first communications system; and
a second base station that communicates with the mobile station using a second communications system, wherein
the mobile station includes
a determining unit that determines feasibility of communication with the second base station using the second communications system, and
a notifying unit that notifies the first base station that the communication with the second base station is not feasible at the time of transmitting a communication request to the first base station when the determining unit determines that the communication is not feasible, and
the first base station includes
a communication unit that communicates with the mobile station using the first communications system in response to the communication request without requesting the mobile station to communicate with the second base station.

2. The radio communications system according to claim 1, wherein the notifying unit of the mobile station notifies the first base station of a frequency number for the second base station at the time of transmitting a communication request to the first base station.

3. A mobile station that communicates with a first base station using a first communications system and communicates with a second base station using a second communications system, the mobile station comprising:
a determining unit that determines feasibility of communication with the second base station using the second communications system, and
a notifying unit that notifies the first base station that the communication with the second base station is not feasible at the time of transmitting a communication request to the first base station when the determining unit determines that the communication is not feasible.

4. A base station of a first base station that communicates with a mobile station using a first communications system, the base station comprising:
a communication unit that communicates with the mobile station using the first communications system in response to a communication request from the mobile station without requesting the mobile station to communicate with a second base station when a notice of the communication with the second base station being not feasible is received at the time of receiving the communication request.

5. A radio communications method in a radio communications system including a mobile station, a first base station that communicates with the mobile station using a first communications system, and a second base station that communicates with the mobile station using a second communications system, the radio communications method comprising:
determining feasibility of communication with the second base station using the second communications system by the mobile station;
notifying the first base station that the communication with the second base station is not feasible at the time of transmitting a communication request to the first base station when the communication is determined to be not feasible by the mobile station; and
communicating with the mobile station using the first communications system in response to the communication request without requesting the mobile station to communicate with the second base station by the first base station.
